# FASCICULE DE BREVET EUROPEEN

(11) **EP 2 946 458 B1**
(45) Date de publication et mention de la délivrance du brevet: **20.03.2024**
(21) Numéro de dépôt: 14704839.1
(22) Date de dépôt: 21.01.2014
(51) Int. Cl.: H02K 3/28, H02K 15/06, H02K 3/487

(54) **PROCEDE DE BOBINAGE D'UN ROTOR OU D'UN STATOR PAR INSERTIONS PARTIELLES DES ENROULEMENTS DE PHASE**
WICKELVERFAHREN EINES ROTORS ODER STATORS DURCH PARTIELLES EINLEGEN VON PHASENWICKLUNGEN
WINDING METHOD OF A ROTOR OR A STATOR BY PARTIAL INSERTIONS OF PHASE WINDINGS

(30) Priorité: 21.01.2013 FR 1350482
(43) Date de publication de la demande: 25.11.2015
(73) Titulaire: Valeo Equipements Electriques Moteur, 94046 Créteil Cedex (FR)
(72) Inventeur: DELCROIX, Eric, F-62170 Beutin (FR); DEFEBVIN, Alain, F-62630 Cormont (FR); DARRAS, Ludovic, F-62170 Montreuil sur Mer (FR); RAMET, Vincent, F-62630 Etaples (FR); DEFEBVIN, Alexandre, F-62630 Cormont (FR)
(74) Mandataire: Valeo Powertrain Systems
(86) Numéro de dépôt international: PCT/FR2014/050105
(87) Numéro de publication internationale: WO 2014/111670

(56) Documents cités:
- EP-A2- 2 197 089
- EP-A2- 2 523 313
- FR-A1- 2 968 858
- US-A- 5 691 590

## Description

### DOMAINE TECHNIQUE DE L'INVENTION

L'invention porte sur un procédé de bobinage d'un rotor ou d'un stator par insertions partielles des enroulements de phase.

L'invention trouve une application particulièrement avantageuse pour le bobinage d'un rotor ou d'un stator d'une machine électrique tournante telle que par exemple un alternateur, un alterno-démarreur, un démarreur de véhicule automobile ou un ralentisseur électromagnétique.

### ETAT DE LA TECHNIQUE

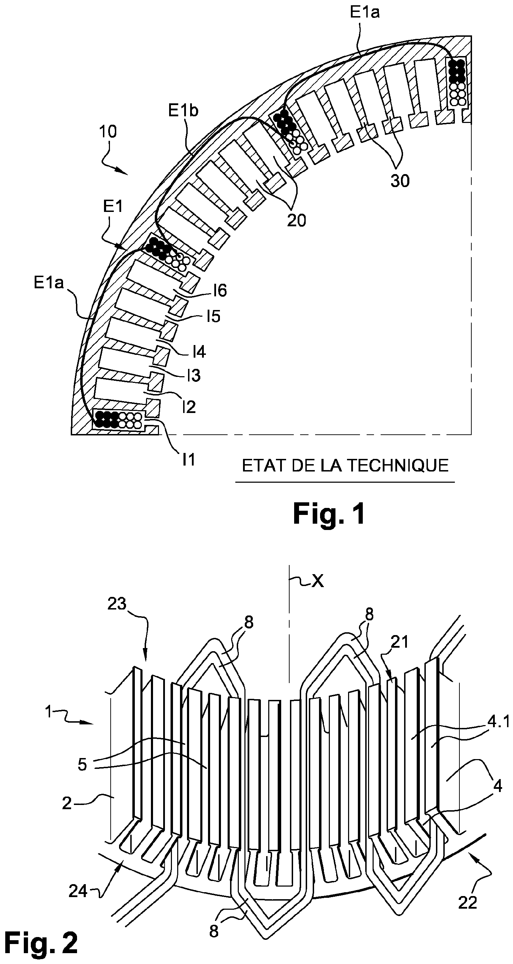

Une machine électrique comporte un rotor tournant à l'intérieur d'un stator suivant un axe principal. Le bobinage est réalisé sur le rotor ou le stator 10 illustré à la figure 1 à l'intérieur d'une pluralité d'encoches 20 prévues à cet effet délimitées par des dents 30. Deux encoches 20 consécutives sont ainsi séparées par une dent 30.

Le bobinage est formé par K enroulements de phase correspondant chacun à une phase de la machine. Chaque enroulement est formé par un empilement de spires formées chacune par un ou plusieurs fils continus généralement en cuivre. Ces fils suivent par exemple une forme ondulée et présentent dans ce cas, des boucles situées alternativement de chaque côté du rotor ou du stator reliant entre eux des brins situés à l'intérieur des encoches. Un ensemble de boucles dépassant d'un côté du stator constitue un chignon du bobinage.

Le bobinage du rotor ou du stator est classiquement réalisé phase par phase. Par exemple, pour une machine triphasée, on va réaliser les trois enroulements de phase l'un après l'autre, chaque enroulement de phase étant décalé d'une ou plusieurs encoches par rapport au précédent. Pour une machine hexaphasée, les six enroulements de phase sont réalisés de la même façon les uns après les autres.

Ainsi, il est connu du document FR2846481 de réaliser une insertion d'une demi-phase E1a d'un premier enroulement de phase E1 dans une série d'encoches 20 correspondante, comme cela est illustré sur la figure 1. Une étape de stratification est réalisée pour garantir un bon empilement des spires les unes sur les autres.

Une nouvelle insertion d'une demi phase E1b est ensuite réalisée pour obtenir le premier enroulement de phase E1 complet. Suivant cette technique, les spires des deux parties de l'enroulement E1a, E1b sont décalées angulairement les unes par rapport aux autres de manière à obtenir un bobinage ondulé réparti, c'est-à-dire que les boucles de la seconde partie E1b sont placées entre les boucles de la première partie E1a de l'enroulement de phase E1.

Des cales de fermeture non représentées sont insérées dans les encoches correspondant au premier enroulement de phase E1.

Le stator 10 est ensuite indexé dans la position d'insertion de l'enroulement de phase suivant. Les opérations sont répétées autant de fois qu'il y a de phases à réaliser à savoir six fois pour les applications simple hexaphasées (cf. insertions I1 à I6 sur la figure 1) ou double triphasées, ou trois fois pour les applications simple triphasées.

L'inconvénient de ce type de bobinage est que les chignons du premier enroulement de phase entravent l'insertion de l'enroulement de la phase suivante et ainsi de suite, la dernière phase étant gênée par les chignons de tous les enroulements de phase précédents.

La conséquence est que les encoches ne sont pas remplies de façon optimum, ce qui dégrade le coefficient de remplissage des encoches c'est-à-dire le rapport entre la section de fil conducteur nu et la section complète de l'encoche, et donc les performances de la machine. Un tel procédé permet ainsi de réaliser des stators à un taux de remplissage maximal de 52% pour les applications triphasées et de 50% pour les applications hexaphasées. Les documents FR 2 968 858 A, EP 2 523 313 A, EP 2 197 089 A, US 5 691 590 A divulguent des procédés différents de bobinage par insertion partielle mais manquent de décrire un changement de nombre de fils ou nombre de spires par insertion partielle.

### OBJET DE L'INVENTION

L'invention vise à proposer un procédé de bobinage permettant notamment d'augmenter le taux de remplissage des encoches.

A cet effet, l'invention a pour objet un procédé de bobinage d'un rotor ou un stator comportant K enroulements de phase constitués chacun de MxN conducteurs ondulés, M étant le nombre de fils, N étant le nombre de spires, caractérisé en ce qu'il comporte l'étape de réaliser successivement l'une après l'autre des insertions partielles de chaque enroulement de phase dans une série d'encoches correspondante, chaque insertion partielle étant réalisée pour une partie d'un enroulement de phase ayant un nombre N de spires formées chacune par un nombre de fils inférieur à M, ou pour une partie d'un enroulement de phase ayant un nombre de spires inférieur à N formées chacune par nombre de fils égal à M, et en ce que une insertion partielle d'un rang donné est réalisée pour tous les enroulements de phase avant de passer à l'insertion partielle du rang suivant de sorte que chaque insertion partielle d'un enroulement de phase, sauf celle de dernier rang, est réalisée avant que les enroulements des autres phases soient complètement réalisés.

Les insertions partielles des enroulements de phase permettent ainsi de limiter la perturbation par les fils des chignons dans la mesure où il y a moins de fils de cuivre dans les chignons pour insérer successivement les parties des enroulements de phase. On peut ainsi atteindre des taux de remplissage pour des applications triphasées ou hexaphasées de l'ordre de 55% qui sont supérieurs à ceux obtenus avec les procédés connus. En outre, l'invention permet de réduire la résistance de phase. On améliore ainsi les performances de la machine notamment en termes de rendement, de débit, et de dissipation thermique. On note également que compte tenu du nombre réduit de conducteurs mis en place à chaque insertion partielle, il y a moins de contrainte sur l'isolant des fils lors du bobinage, ce qui réduit le risque d'endommagement.

Selon une mise en oeuvre, chaque enroulement de phase comporte le même nombre de parties de sorte que le bobinage est effectué suivant un nombre d'insertions partielles égal à K fois le nombre de parties de chaque enroulement de phase.

Selon une mise en oeuvre, dans le cas où chaque insertion partielle est réalisée pour une partie d'un enroulement de phase ayant un nombre N de spires formées par un nombre de fils inférieur à M, il comporte l'étape de brancher électriquement en parallèle les parties d'un même enroulement de phase.

Selon une mise en oeuvre, dans le cas où chaque insertion partielle est réalisée pour une partie d'un enroulement de phase ayant un nombre de spires inférieur à N formées chacune par un nombre de fils égal à M, il comporte l'étape de brancher électriquement en série les parties d'un même enroulement de phase.

Selon une mise en oeuvre, M étant un nombre de fils pair et les insertions partielles étant dîtes demi-insertions étant constituées chacune de N spires formées à partir de la moitié des M fils, le procédé comporte les étapes suivantes:
- réaliser une première demi-insertion de chaque enroulement de phase dans une série d'encoches correspondante et une fois que la totalité des premières demi-insertions des enroulements de phase a été réalisée,
- réaliser une seconde demi-insertion de chaque enroulement de phase dans une série d'encoches correspondante de manière à compléter chaque enroulement de phase.

Selon une mise en oeuvre, K vaut 3 dans le cas d'une machine électrique simple triphasée ou 6 dans le cas d'une machine électrique simple hexaphasée ou double triphasée.

Selon une mise en oeuvre, le procédé comporte l'étape de maintenir en position une partie d'un enroulement de phase insérée à l'intérieur d'une série d'encoches correspondante entre la fin d'une insertion partielle d'un rang et le début d'une insertion partielle de rang suivant.

Selon une mise en oeuvre, après avoir réalisé la dernière insertion partielle d'un enroulement de phase, le procédé comporte l'étape d'insérer une cale de fermeture dans les encoches de la série correspondant à l'enroulement de phase réalisé.

Selon une mise en oeuvre, les insertions partielles suivent l'ordre des séries d'encoches suivant lequel une seule encoche sépare deux séries d'encoches successives.

Selon une mise en oeuvre, les insertions partielles sont réalisées dans un ordre différent par rapport à l'ordre des séries d'encoches.

Selon une mise en oeuvre, les insertions partielles sont réalisées pour des partie de chaque enroulements de phase, lesdites parties étant décalées angulairement l'une par rapport à l'autre et formant un bobinage ondulé réparti.

Selon une mise en oeuvre, les insertions partielles sont dissymétriques de sorte que le nombre de fils varie entre une insertion partielle d'un certain rang et une insertion partielle d'un autre rang.

L'invention a également pour objet un stator, comportant K enroulements de phase constitués chacun de MxN conducteurs ondulés, M étant le nombre de fils, N étant le nombre de spires, caractérisé en ce que les enroulements de phase réalisés respectivement dans des séries d'encoches sont chacun réalisé à l'aide d'insertions partielles successives,
chaque insertion partielle étant réalisée pour une partie d'un enroulement de phase avec un nombre N de spires formées chacune par un nombre de fils inférieur à M, ou avec un nombre de spires inférieur à N formées chacune par un nombre de fils égal à M,
et en ce qu'une insertion partielle d'un rang donné est réalisée pour tous les enroulements de phase avant de passer à l'insertion partielle du rang suivant de sorte que chaque insertion partielle d'un enroulement de phase, sauf celle de dernier rang, est réalisée avant que les enroulements des autres phases soient complètement réalisés.

Selon une réalisation, les insertions partielles sont dissymétriques de sorte que le nombre de fils varie entre une insertion partielle d'un certain rang et une insertion partielle d'un autre rang.

Selon une réalisation, M étant un nombre de fils pair, les insertions partielles dîtes demi-insertions sont constituées chacune de N spires formées à partir de la moitié des M fils et chaque enroulement de phase est réalisé à l'aide d'une première demi-insertion dans une série d'encoches correspondante suivie, une fois que la totalité des premières demi-insertions des enroulements de phase a été réalisée, d'une seconde demi-insertion dans une série d'encoches correspondante de manière à compléter chaque enroulement de phase.

Selon une réalisation, un chignon d'un enroulement de phase correspondant à un ensemble de conducteurs de l'enroulement de phase situés d'un côté du stator est formé par un nombre de parties égal au nombre d'insertions partielles qui ont été réalisées pour l'obtention de l'enroulement de phase.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre une vue de dessus partielle d'un stator comportant un enroulement de phase réalisé suivant un procédé de bobinage de l'état de la technique ;
La figure 2 montre une vue en perspective partielle d'un stator d'une machine électrique à bobiner en mettant en oeuvre le procédé selon l'invention;
Les figures 3a à 3f montrent des représentations schématiques du remplissage des encoches obtenu lors des différentes insertions partielles du procédé de bobinage selon l'invention pour un stator triphasé;
Les figures 4a à 4c montrent des représentations schématiques de différentes configurations d'implantation de chignons obtenues pour un stator triphasé lors de la mise en oeuvre du procédé de bobinage selon l'invention;
Les figures 5a et 5b montrent respectivement une représentation schématique du remplissage des encoches obtenu lors des insertions partielles d'une seule phase et d'une configuration d'implantation de chignons pour un bobinage hexaphasé;
La figure 6 montre une représentation schématique d'un agencement de spires des parties d'un enroulement de phase lors de la réalisation d'un bobinage ondulé réparti.
Les figures 7a à 7c montrent des représentations schématiques de différentes configurations d'implantation de chignons obtenues pour un stator triphasé lors de la réalisation d'un bobinage ondulé réparti selon l'invention.
La figure 8 montre une configuration d'implantation de chignons pour un bobinage hexaphasé ondulé réparti.

Les éléments identiques, similaires, ou analogues conservent la même référence d'une figure à l'autre.

### DESCRIPTION D'EXEMPLES DE REALISATION DE L'INVENTION

La figure 2 montre une vue partielle d'un stator 1 de machine électrique tournante polyphasée pouvant être par exemple un alternateur, un alterno-démarreur ou un ralentisseur électromagnétique. Cette machine est de préférence destinée à être mise en oeuvre dans un véhicule automobile. On rappelle qu'un alterno-démarreur est une machine électrique tournante apte à travailler de manière réversible, d'une part, comme générateur électrique en fonction alternateur, et d'autre part comme moteur électrique, notamment pour démarrer le moteur thermique du véhicule automobile.

Ce stator 1 comporte un corps 2 de forme cylindrique annulaire d'axe X consistant en un empilement axial de tôles planes. Le corps 2 de stator est délimité radialement par une face cylindrique interne 21 et par une face cylindrique externe 22. Le corps 2 est délimité axialement par deux faces radiales d'extrémité axiale 23 et 24. En variante, la face externe pourra ne pas être cylindrique.

Le stator 1 présente des dents 4 et des encoches 5, deux encoches 5 consécutives étant séparées par une dent 4. Les encoches 5 débouchent axialement dans les faces radiales d'extrémité axiales 23, 24 du corps 2. Les encoches 5 sont ouvertes radialement dans la face 21 cylindrique interne du corps 2. Les encoches 5 et les dents 4 sont toutes identiques et elles sont par exemple au nombre de 72. Elles sont réparties angulairement de manière régulière autour de l'axe X du corps. Des isolants sont disposés dans les encoches 5. Chaque dent 4 comporte un pied de dent 4.1 qui s'étend circonférentiellement de part et d'autre de la dent 4.

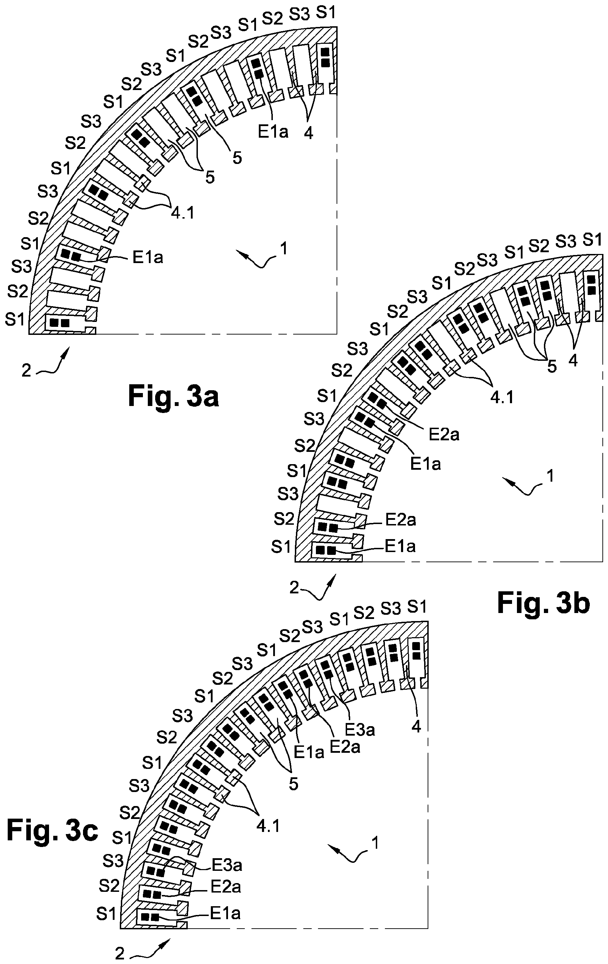

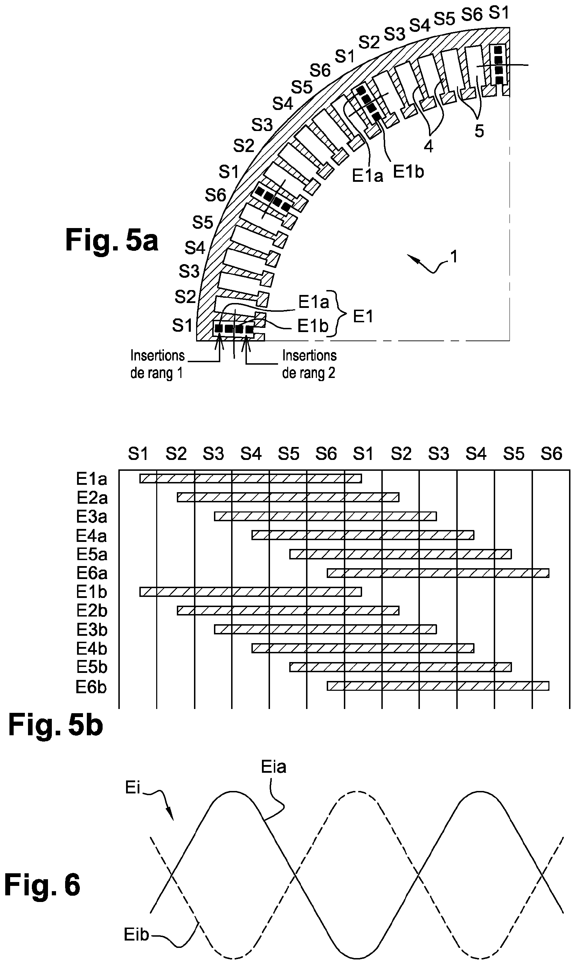

Des enroulements de phase E1-EK (cf. figures 3a à 3f) correspondant à une des phases de la machine électrique sont insérés dans les encoches 5. Chaque enroulement de phase E1-EK est constitué de N spires ondulées empilées radialement formées par M fils 8 conducteur d'électricité. Le terme ondulé est bien connu de l'homme du métier, il correspond à un bobinage selon lequel le fil passe d'une encoche à une autre alternativement en sortant par la face radiale d'extrémité axiale 23 et la face radiale d'extrémité axiale 24 du corps si bien que le fil suit une forme ondulée autour des encoches comme on peut le voir sur la figure 6.

Ainsi, chaque enroulement de phase comprend une pluralité de fils (MxN) qui sont enroulés autour des mêmes encoches. Chaque enroulement de phase est dédié à une phase. Chacun des enroulements de phase est situé dans une série d'encoches qui est différente de celle des autres enroulements de phase. Les enroulements de phase bobinés sont en parallèle l'un part rapport aux autres. Les enroulements sont combinés pour être redressés par un redresseur. Les fils 8 généralement en cuivre et/ou en Aluminium et sont recouverts d'une couche électriquement isolante telle que de l'émail. Cette couche permet l'isolement des fils les uns par rapport aux autres. Les fils présentent de préférence une section ronde mais pourraient en variante présenter une section rectangulaire ou en forme de méplat. Chaque enroulement de phase E1-EK est dédié à une des phases de la machine et est constitué de MxN conducteurs. La machine peut par exemple avoir de 3 à 7 phases. Chaque phase de la machine peut comprendre un ou plusieurs enroulements de phase. En effet, dans le cas d'une machine de type double triphasé par exemple, chaque phase comporte deux enroulements de phase. Un exemple de combinaison des enroulements de phase est illustré dans la figure 12 de la demande de brevet EP0454039. Dans cette figure 12, on peut voir deux jeux de trois phases qui sont chacun combiné en étoile pour être redressés. Sur la figure 2, une seule spire d'un enroulement E1-EK a été représentée.

Chaque fil 8 d'un enroulement de phase E1-EK comporte une série de brins qui sont reçus dans une série d'encoches S1-SK associée. Les fils 8 comportent aussi des boucles reliant les brins consécutifs d'un enroulement et s'étendant alternativement en saillie de part et d'autre des faces d'extrémité axiale 23, 24 du stator 1. Un ensemble de boucles d'un enroulement de phase consistant en un ensemble de conducteurs situés d'un côté du stator forme un chignon du bobinage.

Pour un bobinage, chaque série d'encoches S1-SK est associée à un des K enroulements de phase E1-EK. Deux encoches 5 consécutives d'une série d'encoches S1-SK sont séparées par des encoches adjacentes correspondant chacune à une autre série d'encoches associée à l'un des K autres enroulements de phase. Autrement dit, pour un stator 1 comportant K enroulements de phase E1-EK et dans le cas d'un bobinage simple, les fils 8 d'un enroulement de phase E1-EK sont reçus dans une encoche sur K encoches adjacentes.

Ainsi, pour un stator 1 d'une machine simple triphasée comme c'est le cas à la figure 2, deux encoches 5 adjacentes sont laissées libres entre deux encoches 5 de chaque série. En d'autres termes, les fils 8 d'un enroulement de phase E1-EK sont insérés dans une encoche sur trois encoches adjacentes.

Le procédé selon l'invention consiste à réaliser successivement l'une après l'autre des insertions partielles de chaque enroulement de phase E1-EK dans une série d'encoches S1-SK correspondante. Chaque insertion partielle est réalisée pour une partie d'un enroulement de phase ayant un nombre N de spires formées chacune par un nombre de fils inférieur à M, ou pour une partie d'un enroulement de phase E1-EK ayant un nombre de spires inférieur à N formées chacune par un nombre de fils égal à M. En outre, une insertion partielle d'un rang j donné est réalisée pour tous les enroulements de phase E1-EK avant de passer à l'insertion partielle du rang suivant j+1. Ainsi, chaque insertion partielle d'un enroulement de phase E1-EK, sauf celle de dernier rang, est réalisée avant que les enroulements des autres phases soient complètement réalisés.

On entend par "rang d'une insertion partielle d'un enroulement de phase" le numéro correspondant à la partie de l'enroulement de phase E1-EK à insérer dans les encoches du stator. Ce numéro correspond également à un ordre d'insertion dans le sens où l'insertion partielle de rang i est suivie par l'insertion partielle de rang i+1. Plus précisément, les insertions partielles de rang i sont réalisées pour tous les enroulements de phase E1-EK avant de passer aux insertions partielles de rang i+1. Il serait également possible, dans le cas où les enroulements de phase comprennent deux jeux d'enroulements de phase E1-EN d'une part et EN+1-EK d'autre part (avec N+1 <K), de prévoir que les insertions partielles de rang i et de rang i+1 sont réalisées pour tous les enroulements de phase E1-EN avant de passer aux insertions partielles de rang i et i+1 pour tous les enroulements de phase restants EN+1-EK.

Le numéro de rang est compris entre 1 et le nombre total de parties de l'enroulement de phase E1-EK. Ainsi, par exemple, pour une réalisation d'un bobinage par demi-insertions suivant laquelle chaque enroulement de phase E1-EK est réalisé en deux parties, l'insertion partielle de rang 1 correspond à l'insertion de la première partie de chaque enroulement de phase E1-EK, tandis que l'insertion partielle de rang 2 correspond à l'insertion de la deuxième partie de chaque enroulement de phase E1-EK.

Dans le cas où chaque insertion partielle est réalisée pour une partie d'un enroulement de phase ayant un nombre N de spires formées par un nombre de fils inférieur à M, les parties d'un même enroulement de phase E1-EK sont branchées électriquement en parallèle.

Dans le cas où chaque insertion partielle est réalisée pour une partie d'un enroulement de phase E1-EK ayant un nombre de spires inférieur à N formées chacune par nombre de fils égal à M, les parties d'un même enroulement de phase E1-EK sont branchées électriquement en série.

Un tel procédé permet d'atteindre des taux de remplissage de l'ordre de 55% qui sont supérieurs à ceux obtenus avec les procédés connus. En outre, le procédé permet de réduire la résistance de phase. On améliore ainsi les performances de la machine notamment en termes de rendement, de débit, et de dissipation thermique. On note également que compte tenu du nombre réduit de conducteurs insérés à chaque insertion partielle, il y aura moins de contrainte sur l'isolant des fils lors du bobinage, ce qui diminue le risque d'endommagement.

On décrit par exemple ci-après, en référence avec les figures 3a à 3f montrant de manière schématique des quarts de stator en vue de dessus, les étapes de bobinage d'un stator 1 triphasé simple ayant K=3 enroulements de phase E1-E3 constitués chacun de 4N conducteur, 4 étant le nombre de fils et N le nombre de spires.

Suivant ce procédé, on réalise des demi-insertions successives des enroulements de phase E1-E3, c'est-à-dire des insertions d'une partie de chaque enroulement de phase comportant N spires formées par 2 fils. Dans le cas où les fils présentent un diamètre supérieur à l'écart entre deux pieds de dent 4.1 adjacents, il est possible d'utiliser des pieds de dent rabattables décrits par exemple dans les documents FR631056 ou EP0881752 qui permettent de bobiner le stator avec des encoches ouvertes pour le passage des fils, ces encoches étant ensuite transformées à la fin des opérations de bobinage en encoches semi-fermées par le rabat des pieds de dent.

Comme montré sur la figure 3a, une demi-insertion E1a du premier enroulement de phase E1 est réalisée dans une première série d'encoches S1 correspondante. Un outil assure de préférence le maintien de la partie E1a du premier enroulement E1 insérée dans les encoches de la série S1.

Comme montré sur la figure 3b, une demi-insertion E2a du deuxième enroulement de phase E2 est ensuite réalisée dans une deuxième série d'encoches S2 correspondante. La partie E2a ainsi insérée du deuxième enroulement est maintenue au moyen de l'outil précité dans la série d'encoches S2.

Comme montré sur la figure 3c, une demi-insertion E3a du troisième enroulement de phase E3 est ensuite réalisée dans une troisième série d'encoches S3 correspondante. La partie E3a ainsi insérée du troisième enroulement E3 est maintenue dans la série encoches S3.

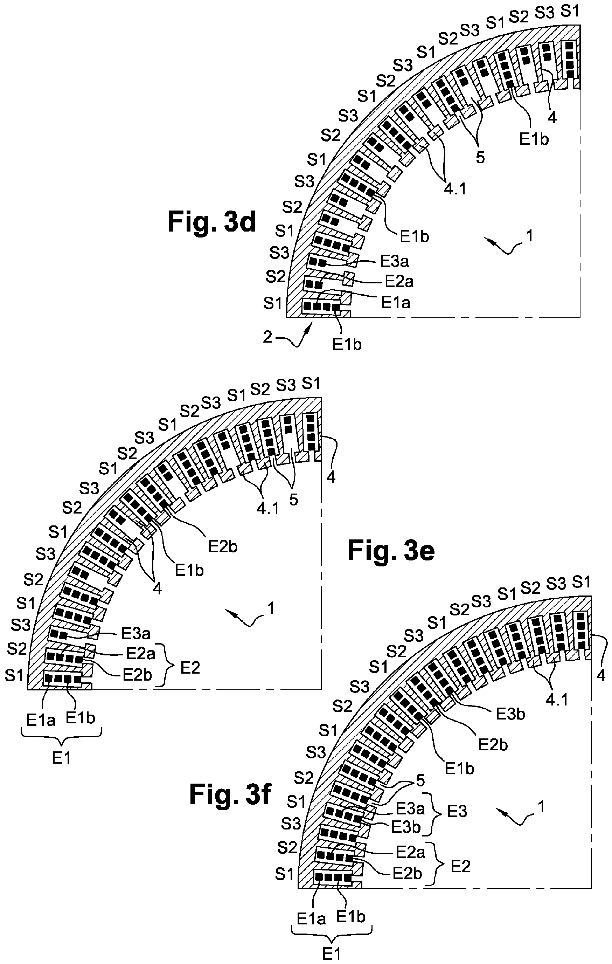

Comme montré sur la figure 3d, après avoir retiré l'outil de maintien de la première série d'encoches S1, une autre demi-insertion E1b du premier enroulement E1 est réalisée pour obtenir l'enroulement E1 complet. On insère ensuite des cales de fermeture à l'intérieur des encoches 5 de la première série d'encoches S1 recevant l'enroulement E1 ainsi réalisé. Ces cales permettent d'éviter les déformations du corps des encoches.

Comme montré sur la figure 3e, après avoir retiré l'outil de maintien de la deuxième série d'encoches S2, une autre demi-insertion E2b du deuxième enroulement E2 est réalisée pour obtenir l'enroulement E2 complet. On insère ensuite des cales de fermeture à l'intérieur des encoches 5 de la deuxième série d'encoches S2 recevant l'enroulement E2.

Comme montré sur la figure 3f, après avoir retiré l'outil de maintien de la troisième série d'encoches S3, une autre demi-insertion E3b du troisième enroulement E3 est réalisée pour obtenir l'enroulement E3 complet. On insère ensuite des cales de fermeture dans les encoches 5 de la série d'encoches S3 recevant le troisième enroulement E3 ainsi réalisé.

Les parties Eia, Eib d'un même enroulement Ei seront branchées électriquement en parallèle.

Ainsi, on remarque que l'insertion partielle de rang 1 est réalisée pour tous les enroulements de phase E1-E3 avant que l'insertion partielle de rang 2 soit réalisée pour un quelconque des enroulements de phase E1-E3.

En variante, les demi-insertions sont réalisées pour des parties d'un enroulement de phase E1-E3 comportant chacune N/2 spires formées par 4 fils. Dans ce cas, les parties Eia, Eib d'un même enroulement de phase Ei sont branchées électriquement en série.

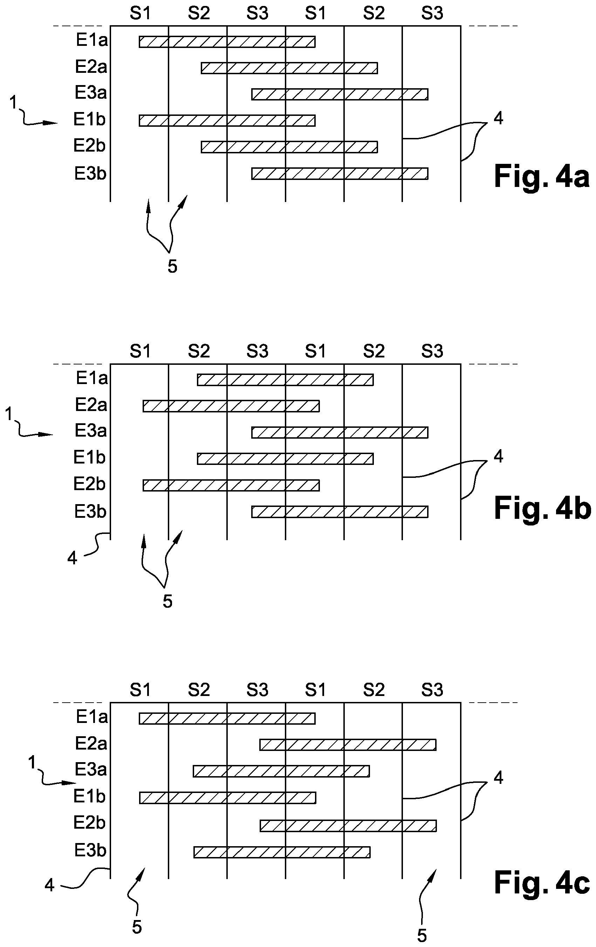

Par ailleurs, un chignon d'un enroulement de phase E1-EK correspondant à un ensemble de conducteurs de l'enroulement de phase E1-EK situés d'un côté du stator est formé par un nombre de parties égal au nombre d'insertions partielles qui ont été réalisées pour l'obtention de l'enroulement de phase E1-EK. Ainsi, la mise en oeuvre du procédé basé sur des demi-insertions implique la réalisation de chignons en deux parties pour chaque enroulement de phase E1-E3 comme cela est montré sur les figures 4a à 4c. Les deux parties des chignons d'un même enroulement de phase E1-E3 sont espacées l'une de l'autre d'une distance radiale correspondant à l'épaisseur des parties des chignons des autres enroulements.

Dans la mise en oeuvre permettant d'obtenir la configuration d'implantation des chignons montrée sur la figure 4a, les insertions partielles des enroulements de phase E1-E3 suivent l'ordre des séries d'encoches S1-S3 suivant lequel une seule encoche sépare deux séries d'encoches successives S1-S3. Ainsi, par rapport à la première série d'encoches S1, la deuxième série d'encoches S2 est décalée d'une encoche par rapport à la première série d'encoches S1, la troisième série d'encoches S3 étant décalée de deux encoches par rapport à la première série d'encoches S1 et d'une encoche par rapport à la deuxième série d'encoches S2.

Bien entendu, en variante, les insertions partielles des enroulements de phase E1-E3 pourront être réalisées dans un ordre différent par rapport à celui des séries d'encoches S1-S3. Ainsi, les insertions partielles des enroulements pourront être réalisées suivant un des ordres suivants: la deuxième S2, la première S1 puis la troisième S3 série d'encoches (cas 2), ou la deuxième S2, la troisième S3 et la première S1 série d'encoches (cas 3), ou la troisième S3, la première S1 puis la deuxième S2 série d'encoches (cas 4) ou la troisième S3, la deuxième S2 puis la première S1 série d'encoches (cas 5) ou la première S1, la troisième S3 puis la deuxième S2 série d'encoches (cas 6). Suivant l'ordre des insertions des enroulements, l'implantation des chignons des enroulements de phase sera bien entendu modifiée. On a ainsi représenté sur les figures 4b et 4c respectivement les configurations d'implantation des chignons pour les cas 2 et 6.

Dans le cas d'un bobinage d'un stator double triphasé (K=6), on réalise comme précédemment la première insertion partielle pour le premier jeu d'enroulement E1-E3 de chaque phase puis pour le deuxième jeu d'enroulement E4-E6 de chaque phase et on réalise la deuxième insertion pour le premier jeu d'enroulement E1-E3 de chaque phase puis la deuxième insertion pour le deuxième jeu d'enroulement E4-E6 de chaque phase.

Dans le cas d'un stator 1 hexaphasé, une première demi-insertion de chaque enroulement de phase E1-E6 est réalisée dans des séries d'encoches S1-S6 correspondantes pour lesquelles deux encoches adjacentes d'une série sont séparées de cinq encoches. On effectue ainsi dans un premier temps, et pour les insertions partielles de rang 1, K=6 opérations de demi-insertions E1a-E6a des enroulements E1-E6 dans les séries d'encoches S1-S6 correspondantes.

Une fois que la totalité des premières demi-insertions E1a-E6a est réalisée, on réalise des secondes demi-insertions E1b-E6b d'enroulements de phase dans les séries d'encoches S1-S6 correspondantes de manière à compléter chaque enroulement de phase E1-E6. On effectue ainsi, pour les insertions partielles de rang 2 réalisées après les insertions partielles de rang 1, de nouveau K=6 opérations de demi-insertions E1b-E6b des enroulements E1-E6 dans les séries d'encoches S1-S6 correspondantes.

Il faut donc réaliser 12 étapes au total pour réaliser le bobinage complet du stator 1 hexaphasé. Comme pour le bobinage du stator triphasé, un outil assure de préférence le maintien de la partie de l'enroulement E1-E6 insérée entre les deux demi-insertions successives, plus précisément entre la fin de la première insertion partielle et le début de la deuxième insertion partielle. Des cales de fermeture sont insérées dans les séries d'encoches S1-S6 à la fin de la réalisation des enroulements de phase E1-E6 correspondants pour éviter les déformations du corps des encoches.

Comme précédemment, pour des enroulements de phase constitués chacun de 4N conducteurs, on pourra réaliser des insertions partielles pour des parties d'un enroulement de phase comportant chacune N spires formées par 2 fils ou des parties comportant chacune N/2 spires formées par 4 fils. Dans le premier cas, les parties de chaque enroulement de phase E1-E6 seront branchées électriquement en parallèle pour former un enroulement de phase, tandis que dans le deuxième cas les parties de chaque enroulement de phase E1-E6 seront branchés électriquement en série pour former un enroulement de phase.

La figure 5a montre ainsi les deux demi-insertions E1a-E1b réalisées pour un premier enroulement de phase E1. Bien entendu, les demi-insertions de rang 1 seront réalisées pour les autres enroulements de phase avant de procéder à la demi-insertion de rang 2 de l'enroulement de phase E1.

La figure 5b montre une configuration d'implantation des chignons en deux parties du stator hexaphasé pour laquelle les insertions partielles E1a-E6a; E1b-E6b suivent l'ordre des séries d'encoches S1-S6. Comme précédemment, d'autres ordres d'insertions partielles sont possibles. Les parties des chignons d'un même enroulement de phase sont séparées radialement entre elles d'une distance correspondant à l'épaisseur des parties des chignons des autres enroulements de phase.

Le procédé permet également de réaliser un bobinage ondulé réparti. A cet effet, comme cela est représenté sur la figure 6, les deux parties a et b de chaque enroulement E1-EK de phase sont décalées angulairement l'une par rapport à l'autre de sorte que les boucles d'une partie a d'un enroulement d'une phase i viennent se placer chacune dans l'espace libre entre deux boucles de l'autre partie b de l'enroulement de phase i. Le bobinage sera ainsi symétrique. En d'autres termes, dans le cas d'un bobinage ondulé réparti, le sens de bobinage de la broche est modifié à chaque spire de sorte les boucles des spires impaires viennent se placer dans l'espace libre entre deux boucles d'une spire paire pour réaliser un bobinage ondulé réparti. Chaque enroulement est donc divisé en deux parties, une partie correspondant aux spires paires et une autre partie correspondant aux spires impaires. Les spires dites paires sont les spires dont le numéro de spire est pair tandis que les spires dites impaires sont les spires dont le numéro de spire est impair. Plus précisément, lorsque l'on bobine dans des encoches les fils vont tourner autour du stator ou du rotor à bobiner, on parle de spire de numéro 1 pour l'ensemble du fil correspondant au premier tour, de spire de numéro 2 pour l'ensemble du fil correspondant au deuxième tour et ainsi de suite.

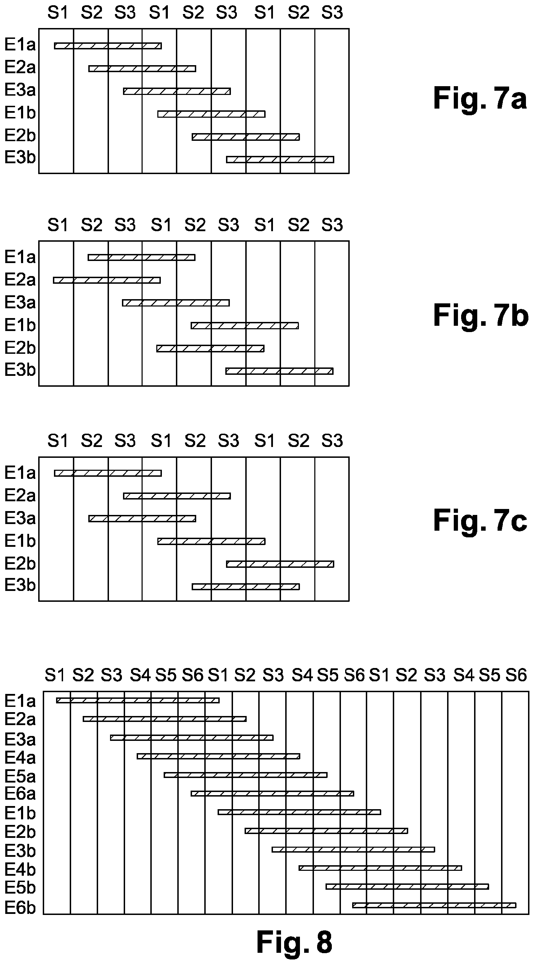

La figure 7a illustre une configuration d'implantation des chignons pour une machine triphasée bobinée ondulée répartie selon laquelle les insertions partielles des enroulements de phase suivent l'ordre des séries d'encoches S1-S3. Ainsi, l'insertion partielle de la première partie E1a de l'enroulement E1 est réalisée dans la série d'encoche S1, puis l'insertion partielle de la première partie E2a de l'enroulement E2 est réalisée dans la série d'encoche S2, puis l'insertion partielle de la première partie E3a de l'enroulement E3 est réalisée dans la série d'encoche S3. Par la suite, l'insertion partielle de la deuxième partie E1b de l'enroulement E1 est réalisée dans la série d'encoche S1, puis l'insertion partielle de la deuxième partie E2b de l'enroulement E2 est réalisée dans la série d'encoche S2, et enfin l'insertion partielle de la deuxième partie E3b de l'enroulement E3 est réalisée dans la série d'encoche S3. L'ordre des séries d'encoches S1-S3 est tel qu'une seule encoche sépare deux séries d'encoches successives S1-S3. Ainsi, par rapport à la première série d'encoches S1, la deuxième série d'encoches S2 est décalée d'une encoche par rapport à la première série d'encoches S1, la troisième série d'encoches S3 étant décalée de deux encoches par rapport à la première série d'encoches S1 et d'une encoche par rapport à la deuxième série d'encoches S2.

Les figures 7b et 7c illustrent des insertions partielles des parties d'enroulements de phase E1-E3 réalisées dans un ordre différent par rapport à celui des séries d'encoches S1-S3. En effet, les insertions partielles des enroulements pourront être réalisées suivant un des ordres suivants: la deuxième S2, la première S1 puis la troisième S3 série d'encoches (cas 2), ou la deuxième S2, la troisième S3 et la première S1 série d'encoches (cas 3), ou la troisième S3, la première S1 puis la deuxième S2 série d'encoches (cas 4) ou la troisième S3, la deuxième S2 puis la première S1 série d'encoches (cas 5) ou la première S1, la troisième S3 puis la deuxième S2 série d'encoches (cas 6). Suivant l'ordre des insertions des enroulements, l'implantation des chignons des enroulements de phase sera bien entendu modifiée. On a ainsi représenté sur les figures 7b et 7c respectivement les configurations d'implantation des chignons pour les cas 2 et 6.

La figure 8 illustre une configuration d'implantation des chignons pour une machine hexaphasée selon laquelle les insertions partielles des enroulements de phase suivent l'ordre des séries d'encoches S1-S6. Ainsi, l'insertion partielle de la première partie E1a de l'enroulement E1 est réalisée dans la série d'encoche S1, puis l'insertion partielle de la première partie E2a de l'enroulement E2 est réalisée dans la série d'encoche S2, puis l'insertion partielle de la première partie E3a de l'enroulement E3 est réalisée dans la série d'encoche S3, puis l'insertion partielle de la première partie E4a de l'enroulement E4 est réalisée dans la série d'encoche S4, puis l'insertion partielle de la première partie E5a de l'enroulement E5 est réalisée dans la série d'encoche S5, et l'insertion partielle de la première partie E6a de l'enroulement E6 est réalisée dans la série d'encoche S6. Par la suite, l'insertion partielle de la deuxième partie E1b de l'enroulement E1 est réalisée dans la série d'encoche S1, puis l'insertion partielle de la deuxième partie E2b de l'enroulement E2 est réalisée dans la série d'encoche S2, puis l'insertion partielle de la deuxième partie E3b de l'enroulement E3 est réalisée dans la série d'encoche S3, puis l'insertion partielle de la deuxième partie E4b de l'enroulement E4 est réalisée dans la série d'encoche S4, puis l'insertion partielle de la deuxième partie E5b de l'enroulement E5 est réalisée dans la série d'encoche S5, et l'insertion partielle de la deuxième partie E6b de l'enroulement E6 est réalisée dans la série d'encoche S6. L'ordre des séries d'encoches S1-S6 est tel qu'une seule encoche sépare deux séries d'encoches successives S1-S6. Ainsi, par rapport à la première série d'encoches S1, la deuxième série d'encoches S2 est décalée d'une encoche par rapport à la première série d'encoches S1, la troisième série d'encoches S3 est décalée de deux encoches par rapport à la première série d'encoches S1 et d'une encoche par rapport à la deuxième série d'encoches S2, la quatrième série d'encoches S4 est décalée de trois encoches par rapport à la première série d'encoches S1 et d'une encoche par rapport à la troisième série d'encoches S3, la cinquième série d'encoches S5 est décalée de quatre encoches par rapport à la première série d'encoches S1 et d'une encoche par rapport à la quatrième série d'encoches S4 et la sixième série d'encoches S6 est décalée de cinq encoches par rapport à la première série d'encoches S1 et d'une encoche par rapport à la cinquième série d'encoches S5.

Dans les figures 7a, 7b, 7c et 8 chacune des insertions partielles correspond à une parties a ou b de chaque enroulement E1-E3 ou E1-E6.

Dans le cas d'un stator 1 ayant des enroulements E1-EK à réaliser à partir de 4 fils, il est également possible de réaliser des quarts d'insertions c'est-à-dire de réaliser des insertions partielles de N spires formées chacune à partir d'un seul fil. Dans le cas de 6 fils, il est même possible de réaliser des 1/6^{ème} d'insertion ou des tiers d'insertions.

Les chignons sont alors composés d'un nombre de parties égal au nombre d'insertions partielles réalisées pour l'obtention de chaque enroulement E1-EK, à savoir trois pour des tiers d'insertions, quatre pour des quarts d'insertions et six pour des 1/6^{ème} d'insertion.

Dans le cas d'un nombre de fils impairs, il est possible de réaliser des insertions partielles dissymétriques, c'est-à-dire que le nombre de fils varie d'une insertion partielle à une autre, c'est-à-dire entre une insertion partielle d'un certain rang j et une insertion partielle d'un autre rang j'. Par exemple, dans le cas d'un bobinage à trois fils, il est possible de réaliser des premières insertions partielles à un fil sur N tours puis des secondes insertions partielles à deux fils sur N tours. De même, dans le cas d'un bobinage à cinq fils, il est possible de réaliser des premières insertions partielles à deux fils puis des deuxièmes insertions partielles à trois fils.

L'homme du métier pourra évidemment transposer la mise en oeuvre du procédé de bobinage décrite ci-dessus pour un stator à un rotor. En effet, la différence réside uniquement dans la configuration des encoches qui, au lieu d'être ménagées dans une face annulaire interne du stator, sont réalisées dans une face annulaire externe du rotor.

## Revendications

1. Procédé de bobinage d'un rotor ou un stator (1) comportant K enroulements de phase (E1-EK) constitués chacun de MxN conducteurs ondulés, M étant le nombre de fils (8), N étant le nombre de spires,
**caractérisé en ce qu'**il comporte l'étape de réaliser successivement l'une après l'autre des insertions partielles (E1a-EKa; E1b-EKb) de chaque enroulement de phase (E1-EK) dans une série d'encoches (S1-SK) correspondante, chaque insertion partielle étant réalisée pour une partie d'un enroulement de phase ayant un nombre N de spires formées chacune par un nombre de fils inférieur à M, ou pour une partie d'un enroulement de phase (E1-EK) ayant un nombre de spires inférieur à N formées chacune par nombre de fils égal à M, et **en ce que** une insertion partielle d'un rang (j) donné est réalisée pour tous les enroulements de phase (E1-EK) avant de passer à l'insertion partielle du rang suivant (j+1) de sorte que chaque insertion partielle d'un enroulement de phase (E1-EK), sauf celle de dernier rang, est réalisée avant que les enroulements des autres phases soient complètement réalisés.

2. Procédé selon la revendication 1, **caractérisé en ce que** chaque enroulement de phase (E1-EK) comporte le même nombre de parties de sorte que le bobinage est effectué suivant un nombre d'insertions partielles (E1a-EKa; E1b-EKb) égal à K fois le nombre de parties de chaque enroulement de phase (E1-EK).

3. Procédé selon la revendication 1 ou 2, **caractérisé en ce que** dans le cas où chaque insertion partielle est réalisée pour une partie d'un enroulement de phase ayant un nombre N de spires formées par un nombre de fils inférieur à M, il comporte l'étape de brancher électriquement en parallèle les parties d'un même enroulement de phase (E1-EK).

4. Procédé selon l'une des revendications 1 ou 2, **caractérisé en ce que** dans le cas où chaque insertion partielle est réalisée pour une partie d'un enroulement de phase (E1-EK) ayant un nombre de spires inférieur à N formées chacune par un nombre de fils égal à M, il comporte l'étape de brancher électriquement en série les parties d'un même enroulement de phase (E1-EK).

5. Procédé selon l'une des revendications 1 à 3, **caractérisé en ce que** M étant un nombre de fils pair et les insertions partielles dîtes demi-insertions étant constituées chacune de N spires formées à partir de la moitié des M fils, il comporte les étapes suivantes:
- réaliser une première demi-insertion (E1a-EKa) de chaque enroulement de phase (E1-EK) dans une série d'encoches (S1-SK) correspondante et une fois que la totalité des premières demi-insertions (E1a-EKa) des enroulements de phase (E1-EK) a été réalisée,
- réaliser une seconde demi-insertion (E1b-EKb) de chaque enroulement de phase (E1-EK) dans une série d'encoches (S1-SK) correspondante de manière à compléter chaque enroulement de phase.

6. Procédé selon l'une des revendications 1 à 5, **caractérisé en ce que** K vaut 3 dans le cas d'une machine électrique simple triphasée ou 6 dans le cas d'une machine électrique simple hexaphasée ou double triphasée.

7. Procédé selon l'une des revendications 1 à 6, **caractérisé en ce qu'**il comporte l'étape de maintenir en position une partie d'un enroulement de phase (E1-EK) insérée à l'intérieur d'une série d'encoches correspondante entre la fin d'une insertion partielle (E1a-EKa) d'un rang (j) et le début d'une insertion partielle (E1b-EKb) de rang suivant (j+1).

8. Procédé selon l'une des revendications 1 à 7, **caractérisé en ce que**, après avoir réalisé la dernière insertion partielle (E1b-EKb) d'un enroulement de phase (E1-EK), il comporte l'étape d'insérer une cale de fermeture dans les encoches de la série correspondant à l'enroulement de phase (E1-EK) réalisé.

9. Procédé selon l'une des revendications 1 à 8, **caractérisé en ce que** les insertions partielles (E1a-EKa; E1b-EKb) suivent l'ordre des séries d'encoches (S1-SK) suivant lequel une seule encoche sépare deux séries d'encoches successives.

10. Procédé selon l'une des revendications 1 à 8, **caractérisé en ce que** les insertions partielles (E1a-EKa; E1b-EKb) sont réalisées en insérant l'insertion partielle (E1a) dans une deuxième série d'encoche S2, la deuxième insertion partielle (E2a) dans une première série d'encoche S1 et enfin la troisième insertion partielle (E3a) dans une troisième série d'encoche S3 puis la première insertion partielle complémentaire (E1b) dans la deuxième série d'encoche S2, la deuxième insertion partielle complémentaire (E2b) dans la première série d'encoche S1 et enfin la troisième insertion partielle complémentaire (E3b) dans la troisième série d'encoche S3.

11. Procédé selon l'une des revendications 1 à 10, **caractérisé en ce que** les insertions partielles (E1a-EKa; E1b-EKb) sont chacune réalisées pour une partie d'un enroulement de phase (E1-EK), lesdites parties étant décalées angulairement l'une par rapport à l'autre pour former un bobinage ondulé réparti.

12. Procédé selon l'une des revendications 1 à 11, **caractérisé en ce que** les insertions partielles (E1a-EKa; E1b-EKb) sont dissymétriques de sorte que le nombre de fils varie entre une insertion partielle d'un certain rang (j) et une insertion partielle d'un autre rang (j'), le nombre de spires N des enroulements de phases (E1-EK) étant impair.

13. Stator, comportant K enroulements de phase (E1-EK) constitués chacun de MxN conducteurs ondulés, M étant le nombre de fils (8), N étant le nombre de spires,
**caractérisé en ce que** les enroulements de phase (E1-EK) réalisés respectivement dans des séries d'encoches (S1-SK) sont chacun réalisé à l'aide d'insertions partielles (E1a-EKa; E1b-EKb) successives,
chaque insertion partielle étant réalisée pour une partie d'un enroulement de phase avec un nombre N de spires formées chacune par un nombre de fils inférieur à M, ou avec un nombre de spires inférieur à N formées chacune par un nombre de fils égal à M,
**en ce qu'**une insertion partielle d'un rang (j) donné est réalisée pour tous les enroulements de phase (E1-EK) avant de passer à l'insertion partielle du rang suivant (j+1) de sorte que chaque insertion partielle d'un enroulement de phase (E1-EK), sauf celle de dernier rang, est réalisée avant que les enroulements des autres phases soient complètement réalisés.

14. Stator selon la revendication 13, **caractérisé en ce que** M est un nombre de fils pair et les insertions partielles dîtes demi-insertions sont constituées chacune de N spires formées à partir de la moitié des M fils et **en ce que** chaque enroulement de phase (E1-EK) est réalisé à l'aide d'une première demi-insertion (E1a-EKa) dans une série d'encoches (S1-SK) correspondante suivie, une fois que la totalité des premières demi-insertions (E1a-EKa) des enroulements de phase (E1-EK) a été réalisée, d'une seconde demi-insertion (E1b-EKb) dans une série d'encoches (S1-SK) correspondante de manière à compléter chaque enroulement de phase.

15. Stator selon la revendication 13 ou 14, **caractérisé en ce qu'**un chignon d'un enroulement de phase (E1-EK) correspondant à un ensemble de conducteurs de l'enroulement de phase (E1-EK) situés d'un côté du stator est formé par un nombre de parties égal au nombre d'insertions partielles qui ont été réalisées pour l'obtention de l'enroulement de phase (E1-EK).

16. Stator selon l'une des revendications 13 à 15, **caractérisé en ce que** dans le cas où chaque insertion partielle est réalisée pour une partie d'un enroulement de phase (E1-EK) ayant un nombre de spires inférieur à N formées chacune par un nombre de fils égal à M, les parties d'un même enroulement de phase (E1-EK) sont branchées en série.

17. Stator selon l'une des revendications 13 à 16, **caractérisé en ce que** les insertions partielles (E1a-EKa; E1b-EKb) sont dissymétriques de sorte que le nombre de fils varie entre une insertion partielle d'un certain rang (j) et une insertion partielle d'un autre rang (j'), le nombre de spires N des enroulements de phases (E1-EK) étant impair.

## Patentansprüche

1. Wickelverfahren eines Rotors oder eines Stators (1), der K Phasenwicklungen (E1-EK) umfasst, die jeweils aus MxN wellenförmigen Leitern bestehen, wobei M die Anzahl von Drähten (8) ist, wobei N die Anzahl von Windungen ist,
**dadurch gekennzeichnet, dass** es den Schritt des sukzessiven Durchführens, eine nach der anderen, von partiellen Einfügungen (Ela-EKa; Elb-EKb) jeder Phasenwicklung (E1-EK) in einer entsprechenden Nutenfolge (Sl-SK) umfasst, wobei jede partielle Einfügung für einen Teil einer Phasenwicklung, der eine Anzahl N von Windungen, die jeweils durch eine Anzahl von Drähten kleiner M gebildet sind, aufweist, oder für einen Teil einer Phasenwicklung (E1-EK), der eine Anzahl von Windungen kleiner N, die jeweils durch eine Anzahl von Drähten gleich M gebildet sind, aufweist, durchgeführt wird, und dass eine partielle Einfügung eines gegebenen Ranges (j) für alle Phasenwicklungen (E1-EK) durchgeführt wird, bevor mit der partiellen Einfügung des nächsten Ranges (j+1) fortgefahren wird, sodass jede partielle Einfügung einer Phasenwicklung (E1-EK), mit Ausnahme derjenigen des letzten Ranges, durchgeführt wird, bevor die Wicklungen der anderen Phasen komplett durchgeführt sind.

2. Verfahren nach Anspruch 1, **dadurch gekennzeichnet, dass** jede Phasenwicklung (E1-EK) die gleiche Anzahl von Teilen umfasst, sodass das Wickeln gemäß einer Anzahl von partiellen Einfügungen (Ela-EKa; Elb-EKb) vorgenommen wird, die gleich dem K-fachen der Anzahl von Teilen jeder Phasenwicklung (E1-EK) ist.

3. Verfahren nach Anspruch 1 oder 2, **dadurch gekennzeichnet, dass** es in dem Fall, in dem jede partielle Einfügung für einen Teil einer Phasenwicklung durchgeführt wird, der eine Anzahl N von Windungen, die durch eine Anzahl von Drähten kleiner M gebildet sind, aufweist, den Schritt des elektrischen Parallelschaltens der Teile einer gleichen Phasenwicklung (E1-EK) umfasst.

4. Verfahren nach einem der Ansprüche 1 oder 2, **dadurch gekennzeichnet, dass** es in dem Fall, in dem jede partielle Einfügung für einen Teil einer Phasenwicklung (E1-EK) durchgeführt wird, der eine Anzahl von Windungen kleiner N, die jeweils durch eine Anzahl von Drähten gleich M gebildet sind, aufweist, den Schritt des elektrischen In-Reihe-Schaltens der Teile einer gleichen Phasenwicklung (E1-EK) umfasst.

5. Verfahren nach einem der Ansprüche 1 bis 3, **dadurch gekennzeichnet, dass** es, wobei M eine gerade Anzahl von Drähten ist und die partiellen Einfügungen, die als Halbeinfügungen bezeichnet werden, jeweils aus N Windungen bestehen, die aus der Hälfte der M Drähte gebildet sind, die folgenden Schritte umfasst:
- Durchführen einer ersten Halbeinfügung (Ela-EKa) jeder Phasenwicklung (E1-EK) in einer entsprechenden Nutenfolge (Sl-SK) und, sobald alle ersten Halbeinfügungen (Ela-EKa) der Phasenwicklungen (E1-EK) durchgeführt wurden,
- Durchführen einer zweiten Halbeinfügung (Elb-EKb) jeder Phasenwicklung (E1-EK) in einer entsprechenden Nutenfolge (Sl-SK), um jede Phasenwicklung fertigzustellen.

6. Verfahren nach einem der Ansprüche 1 bis 5, **dadurch gekennzeichnet, dass** K gleich 3 ist, wenn es sich um eine einfach dreiphasige elektrische Maschine handelt, oder gleich 6 ist, wenn es sich um eine einfach sechsphasige oder zweifach dreiphasige elektrische Maschine handelt.

7. Verfahren nach einem der Ansprüche 1 bis 6, **dadurch gekennzeichnet, dass** es den Schritt des Festhaltens eines Teils einer Phasenwicklung (E1-EK), der in das Innere einer entsprechenden Nutenfolge eingefügt wurde, zwischen dem Ende einer partiellen Einfügung (Ela-EKa) eines Rangs (j) und dem Beginn einer partiellen Einfügung (Elb-EKb) des nächsten Ranges (j+1) umfasst.

8. Verfahren nach einem der Ansprüche 1 bis 7, **dadurch gekennzeichnet, dass** es nach der Durchführung der letzten partiellen Einfügung (Elb-EKb) einer Phasenwicklung (E1-EK) den Schritt des Einfügens eines Verschlusskeils in die Nuten der Folge, die der durchgeführten Phasenwicklung (E1-EK) entspricht, umfasst.

9. Verfahren nach einem der Ansprüche 1 bis 8, **dadurch gekennzeichnet, dass** die partiellen Einfügungen (Ela-EKa; Elb-EKb) der Reihenfolge der Nutenfolgen (Sl-SK) folgen, gemäß der eine einzige Nut zwei sukzessive Nutenfolgen trennt.

10. Verfahren nach einem der Ansprüche 1 bis 8, **dadurch gekennzeichnet, dass** die partiellen Einfügungen (Ela-EKa; Elb-EKb) durchgeführt werden, indem die partielle Einfügung (E1a) in eine zweite Nutenfolge S2, die zweite partielle Einfügung (E2a) in eine erste Nutenfolge S1 und schließlich die dritte partielle Einfügung (E3a) in eine dritte Nutenfolge S3, dann die erste komplementäre partielle Einfügung (E1b) in die zweite Nutenfolge S2, die zweite komplementäre partielle Einfügung (E2b) in die erste Nutenfolge S1 und schließlich die dritte komplementäre partielle Einfügung (E3b) in die dritte Nutenfolge S3 eingefügt wird.

11. Verfahren nach einem der Ansprüche 1 bis 10, **dadurch gekennzeichnet, dass** die partiellen Einfügungen (Ela-EKa; Elb-EKb) jeweils für einen Teil einer Phasenwicklung (E1-EK) durchgeführt werden, wobei die Teile winkelförmig zueinander versetzt sind, um eine verteilte wellenförmige Wicklung zu bilden.

12. Verfahren nach einem der Ansprüche 1 bis 11, **dadurch gekennzeichnet, dass** die partiellen Einfügungen (Ela-EKa; Elb-EKb) asymmetrisch sind, sodass die Anzahl von Drähten zwischen einer partiellen Einfügung eines gewissen Ranges (j) und einer partiellen Einfügung eines anderen Ranges (j') variiert, wobei die Anzahl von Windungen N der Phasenwicklungen (E1-EK) ungerade ist.

13. Stator, der K Phasenwicklungen (E1-EK) umfasst, die jeweils aus MxN wellenförmigen Leitern bestehen, wobei M die Anzahl von Drähten (8) ist, wobei N die Anzahl von Windungen ist,
**dadurch gekennzeichnet, dass** die Phasenwicklungen (E1-EK), die jeweils in Nutenfolgen (Sl-SK) durchgeführt werden, jeweils durch sukzessive partielle Einfügungen (Ela-EKa; Elb-EKb) durchgeführt werden,
wobei jede partielle Einfügung für einen Teil einer Phasenwicklung mit einer Anzahl N von Windungen, die jeweils durch eine Anzahl von Drähten kleiner M gebildet sind, oder mit einer Anzahl von Windungen kleiner N, die jeweils durch eine Anzahl von Drähten gleich M gebildet sind, durchgeführt wird,
dass eine partielle Einfügung eines gegebenen Ranges (j) für alle Phasenwicklungen (E1-EK) durchgeführt wird, bevor mit der partiellen Einfügung des nächsten Ranges (j+1) fortgefahren wird, sodass jede partielle Einfügung einer Phasenwicklung (E1-EK), mit Ausnahme derjenigen des letzten Ranges, durchgeführt wird, bevor die Wicklungen der anderen Phasen komplett durchgeführt sind.

14. Stator nach Anspruch 13, **dadurch gekennzeichnet, dass** M eine gerade Anzahl von Drähten ist und die partiellen Einfügungen, die als Halbeinfügungen bezeichnet werden, jeweils aus N Windungen bestehen, die aus der Hälfte der M Drähte gebildet sind, und dass jede Phasenwicklung (E1-EK) mit Hilfe einer ersten Halbeinfügung (Ela-EKa) in einer entsprechenden Nutenfolge (Sl-SK) durchgeführt wird, gefolgt von, sobald alle ersten Halbeinfügungen (Ela-EKa) der Phasenwicklungen (E1-EK) durchgeführt wurden, einer zweiten Halbeinfügung (Elb-EKb) in einer entsprechenden Nutenfolge (Sl-SK), um jede Phasenwicklung fertigzustellen.

15. Stator nach Anspruch 13 oder 14, **dadurch gekennzeichnet, dass** ein Wickelkopf einer Phasenwicklung (E1-EK), der einem Satz Leiter der Phasenwicklung (E1-EK), die sich auf einer Seite des Stators befinden, entspricht, durch eine Anzahl von Teilen gebildet wird, die gleich der Anzahl von partiellen Einfügungen ist, die für den Erhalt der Phasenwicklung (E1-EK) durchgeführt werden.

16. Stator nach einem der Ansprüche 13 bis 15, **dadurch gekennzeichnet, dass** in dem Fall, in dem jede partielle Einfügung für einen Teil einer Phasenwicklung (E1-EK) durchgeführt wird, der eine Anzahl von Windungen kleiner N, die jeweils durch eine Anzahl von Drähten gleich M gebildet sind, aufweist, die Teile einer gleichen Phasenwicklung (E1-EK) in Reihe geschaltet sind.

17. Stator nach einem der Ansprüche 13 bis 16, **dadurch gekennzeichnet, dass** die partiellen Einfügungen (Ela-EKa; Elb-EKb) asymmetrisch sind, sodass die Anzahl von Drähten zwischen einer partiellen Einfügung eines gewissen Ranges (j) und einer partiellen Einfügung eines anderen Ranges (j') variiert, wobei die Anzahl von Windungen N der Phasenwicklungen (E1-EK) ungerade ist.

## Claims

1. Method for winding a rotor or a stator (1) comprising K phase windings (E1-EK) each made up of MxN undulating conductors, M being the number of wires (8), N being the number of turns,
**characterized in that** it comprises the step of successively, one after the other, performing partial insertions (Ela-EKa; E1b-EKb)of each phase winding (E1-EK) into a corresponding series of slots (Sl-SK), each partial insertion being performed on part of a phase winding having a number N of turns which are each formed by a number of wires less than M, or on part of a phase winding (E1-EK) having a number of turns less than N which are each formed by a number of wires equal to M, and **in that** a partial insertion of a given rank (j) is performed for all of the phase windings (E1-EK) before moving on to the partial insertion of the next rank (j+1) so that each partial insertion of a phase winding (E1-EK), except for that of the last rank, is performed before the windings of the other phases are fully accomplished.

2. Method according to Claim 1, **characterized in that** each phase winding (E1-EK) comprises the same number of parts such that the winding is performed as a number of partial insertions (Ela-EKa; Elb-EKb) equal to K times the number of parts of each phase winding (E1-EK).

3. Method according to Claim 1 or 2, **characterized in that**, in the scenario in which each partial insertion is performed on part of a phase winding having a number N of turns which are formed by a number of wires less than M, it comprises the step of connecting the parts of the one same phase winding (E1-EK) electrically in parallel.

4. Method according to one of Claims 1 or 2, **characterized in that**, in the scenario in which each partial insertion is performed on part of a phase winding (E1-EK) having a number of turns less than N which are each formed by a number of wires equal to M, it comprises the step of connecting the parts of the one same phase winding (E1-EK) electrically in series.

5. Method according to one of Claims 1 to 3, **characterized in that** with M being an even number of wires and the partial insertions referred to as semi-insertions each consisting of N turns which are formed from half of the M wires, it comprises the following steps:
- performing a first semi-insertion (Ela-EKa) of each phase winding (E1-EK) into a corresponding series of slots (Sl-SK), and once all of the first semi-insertions (Ela-EKa) of the phase windings (E1-EK) have been accomplished,
- performing a second semi-insertion (Elb-EKb) of each phase winding (E1-EK) into a corresponding series of slots (Sl-SK) in order to complete each phase winding.

6. Method according to one of Claims 1 to 5, **characterized in that** K is equal to 3 in the case of a simple three-phase electric machine or to 6 in the case of a simple six-phase or double three-phase electric machine.

7. Method according to one of Claims 1 to 6, **characterized in that** it comprises the step of holding part of a phase winding (E1-EK) that has been inserted into a corresponding series of slots in position between the end of a partial insertion (Ela-EKa) of one rank (j) and the start of a partial insertion (Elb-EKb) of a next rank (j+1) .

8. Method according to one of Claims 1 to 7, **characterized in that**, after having accomplished the final partial insertion (Elb-EKb) of a phase winding (E1-EK), it comprises the step of inserting a closing wedge into the slots of the series corresponding to the phase winding (E1-EK) that has been completed.

9. Method according to one of Claims 1 to 8, **characterized in that** the partial insertions (Ela-EKa; Elb-EKb) follow the order of the series of slots (Sl-SK) whereby just one single slot separates two successive series of slots.

10. Method according to one of Claims 1 to 8, **characterized in that** the partial insertions (Ela-EKa; Elb-EKb) are performed by inserting the partial insertion (E1a) into a second series of slots S2, the second partial insertion (E2a) into a first series of slots S1 and finally the third partial insertion (E3a) into a third series of slots S3 then the first additional partial insertion (E1b) into the second series of slots S2, the second additional partial insertion (E2b) into the first series of slots S1, and finally the third additional partial insertion (E3b) into the third series of slots S3.

11. Method according to one of Claims 1 to 10, **characterized in that** the partial insertions (Ela-EKa; Elb-EKb) are each performed on part of a phase winding (E1-EK), said parts being angularly offset from one another in order to form a distributed wave winding.

12. Method according to one of Claims 1 to 11, **characterized in that** the partial insertions (Ela-EKa; Elb-EKb) are asymmetric such that the number of wires varies between a partial insertion of a certain rank (j) and a partial insertion of another rank (j'), the number of turns N of the phase windings (E1-EK) being an uneven number.

13. Stator comprising K phase windings (E1-EK) each made up of MxN undulating conductors, M being the number of wires (8), N being the number of turns,
**characterized in that** the phase windings (E1-EK) created respectively in series of slots (Sl-SK) are each created by means of successive partial insertions (Ela-EKa; E1b-EKb),
each partial insertion being performed on part of a phase winding having a number N of turns which are each formed by a number of wires less than M, or having a number of turns less than N which are each formed by a number of wires equal to M,
and **in that** a partial insertion of a given rank (j) is performed for all of the phase windings (E1-EK) before moving on to the partial insertion of the next rank (j+1) so that each partial insertion of a phase winding (E1-EK), except for that of the last rank, is performed before the windings of the other phases are fully accomplished.

14. Stator according to Claim 13, **characterized in that** M is an even number of wires and the partial insertions referred to as semi-insertions each consist of N turns which are formed from half of the M wires, and **in that** each phase winding (E1-EK) is created by means of a first semi-insertion (Ela-EKa) into a corresponding series of slots (Sl-SK), followed, once all of the first semi-insertions (Ela-EKa) of the phase windings (E1-EK) have been accomplished, by a second semi-insertion (Elb-EKb) into a corresponding series of slots (Sl-SK) in order to complete each phase winding.

15. Stator according to Claim 13 or 14, **characterized in that** a phase winding (E1-EK) overhang corresponding to a collection of conductors of the phase winding (E1-EK) which are situated on one side of the stator is formed by a number of parts that is equal to the number of partial insertions that have been performed in order to obtain the phase winding (E1-EK).

16. Stator according to one of Claims 13 to 15, **characterized in that**, in the scenario in which each partial insertion is performed on part of a phase winding (E1-EK) having a number of turns less than N which are each formed by a number of wires equal to M, the parts of the one same phase winding (E1-EK) are connected in series.

17. Stator according to one of Claims 13 to 16, **characterized in that** the partial insertions (Ela-EKa; Elb-EKb) are asymmetric such that the number of wires varies between a partial insertion of a certain rank (j) and a partial insertion of another rank (j'), the number of turns N of the phase windings (E1-EK) being an uneven number.
